# EUROPEAN PATENT SPECIFICATION

(11) **EP 1 695 296 B1**
(45) Date of publication and mention of the grant of the patent: **18.02.2009**
(21) Application number: 04806362.2
(22) Date of filing: 16.12.2004
(51) Int. Cl.: G07C 9/00, H04B 13/00

(54) **A SYSTEM FOR IDENTIFYING AN INDIVIDUAL IN AN ELECTRONIC TRANSACTION**
SYSTEM ZUM IDENTIFIZIEREN EINES INDIVIDUUMS IN EINER ELEKTRONISCHEN TRANSAKTION
SYSTEME D'IDENTIFICATION D'UN INDIVIDU AU COURS D'UNE TRANSACTION ELECTRONIQUE

(30) Priority: 18.12.2003 EP 03293218
(43) Date of publication of application: 30.08.2006
(73) Proprietor: Gemalto SA, 92190 Meudon (FR)
(72) Inventor: RHELIMI, Alain, F-78170 La Celle Saint-Cloud (FR)
(74) Representative: Cour, Pierre
(86) International application number: PCT/IB2004/004156
(87) International publication number: WO 2005/062236

(56) References cited:
- EP-A- 1 013 517
- EP-A- 1 033 687
- EP-A- 1 239 420
- DE-A1- 10 132 031
- ZIMMERMAN T G: "PERSONAL AREA NETWORKS: NEAR-FIELD INTRABODY COMMUNICATION" IBM SYSTEMS JOURNAL, IBM CORP. ARMONK, NEW YORK, US, vol. 35, no. 3/4, 1996, pages 609-617, XP000635090 ISSN: 0018-8670 cited in the application

## Description

### BACKGROUND OF THE INVENTION

### Field of the invention

The present invention generally relates to the identification of individuals in an electronic transaction.

### Background art

There are a large number of applications requiring identification of an individual such as: access control to restricted areas, transportation and electronic ticketing, authentication in commercial and financial transactions, access to computers and networks, road toll management, etc.

Electronic identification typically requires on one side a terminal connected to the system to be controlled, and on the other side a portable device, usually in the form of a chip card or badge being possessed by the individual requiring identification.

A coupling is performed between the terminal and the portable device, either through electric contacts or through wireless coupling, such as inductive or radiofrequency (RF) coupling, which technologies are becoming more and more popular since they do not require insertion of the card in a slot of the terminal.

Identification of the individual often requires the use of a password such as a PIN code and/or biometric data sensed from the individual. Whenever wireless coupling is used, further security features must be provided for, in order to avoid tampering by emulation of the exchange of signals required by the identification protocol between the terminal and the portable device.

The high level of security required in a number of applications has led to a multiplicity of specific solutions specially dedicated to the application concerned, leading to complex solutions with very poor flexibility, in addition to high cost for design and manufacture.

There is accordingly a need for a versatile, universal system, which might be manufactured at low cost in large quantities and easily adapted to a variety of different applications, yet being reliable and simple to use with a high level of security in the identification process. DE 101 32 031 A discloses an over-the-skin access control system according to the preamble of claim 1.

### SUMMARY OF THE INVENTION

It is therefore an object of the invention to provide such a system. The system of the invention is of the type comprising a terminal, an independent portable device including a data processing means, and a wireless coupling means for exchanging individual-identification data between said terminal and said portable device. Aspects of the invention are disclosed in independent claims 1 and 10.

According to specific, preferred embodiments of the invention :
- said control means is further adapted to conditionally issue a signal for enabling the operation of said wireless coupling means before further execution of said transaction ;
- said checking means in the portable device includes a biometric sensor for checking biometric data of the individual upon physical contact established by the individual, one of a fingerprint sensor, a voiceprint sensor and a subcutaneous ultrasonic sensor;
- the system further includes a means for detecting an interruption of said physical contact established by the individual between the terminal and the portable device ;
- said body-medium communication means includes Direct Sequence Spread Spectrum means, is a one-way and non-secure communication means, an/or is a non-secure communication means ;
- the connection code transmitted to the portable device includes terminal-type identification data, said control means being further adapted to check said terminal-type identification data received by the portable device with respect to corresponding data stored in the portable device, and to conditionally issue said signal for enabling further execution of the transaction in response to said terminal-type identification data complying with corresponding data stored in the portable device;
- the connection code transmitted to the portable device includes first random data, said control means being further adapted to re-transmit said first random data to the terminal through said wireless coupling means, and the terminal being adapted to check said re-transmitted first random data with respect to said first data transmitted in the connection code ;
- the connection code transmitted to the portable device includes second random data, said control means being further adapted to store said second random data received, the terminal being further adapted to issue a re-transmission request to the portable device through said wireless coupling means, said control means is further being adapted to re-trarismit to the terminal said stored second random data upon reception of said re-transmission request, arid the terminal being further adapted to check said re-transmitted second random data with respect to the initially transmitted second random data.

### BRIEF DESCRIPTION OF THE DRAWINGS

The foregoing and other objects, aspects and advantages of the invention will be better understood from the following detailed description of a preferred embodiment of the invention with reference to the appended drawings, in which the same numerals refer to identical or functionally similar features over the different figures.
Figure 1 schematically illustrates the essential integers of the invention and the way they mutually interact.
Figure 2 is a diagram illustrating the various functional blocks making up the portable device of the invention.
Figure 3 is a schematic illustration explaining the body-medium type of communication used by the system of the invention.
Figure 4 schematically illustrates the functional blocs of the body-medium communication transmitter included in the terminal used by the system of the invention.

### DETAILED DESCRIPTION OF

### A PREFERRED EMBODIMENT OF THE INVENTION

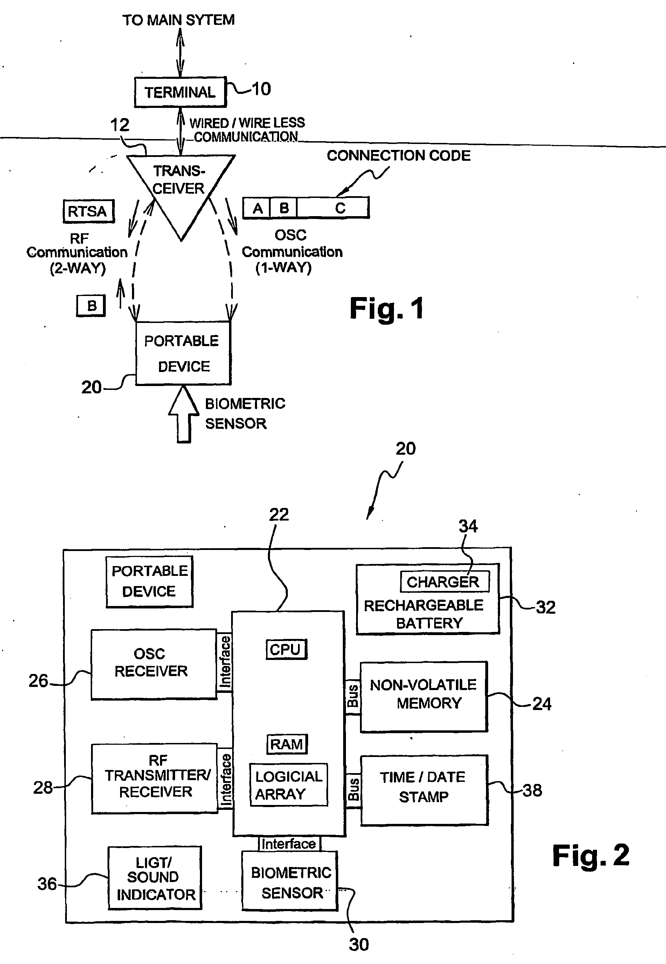

Referring now to the drawings, Figure 1 shows the basic parts of the system of the invention, which essentially includes a terminal 10 connected to the main system to be controlled (mainframe computer, access control, etc.) and a portable device 20.

Terminal 10 is provided with a transceiver (transmitter-receiver) 12 which is placed at the immediate vicinity of the individual requesting identification, specifically at a location where the individual may have physical contact with the transceiver 12, e.g. by touching a metallic part such as a contact pad, handle, etc. of the same. Transceiver 12 is connected to the rest of the terminal 10 through bidirectional (wired or wireless) communication. The other essential part of the system is a portable device 20 which may be held by the individual requiring identification, specifically which may be physically contacted by this individual. This portable device is preferably embedded in an object such as a bracelet or wristwatch having a metallic back, enabling permanent electric contact with the body mass of the individual.

Two different communication channels may be established between transceiver 12 and portable device 20.

The first communication channel, which will be called "Over Skin Communication" (OSC), is a one-way, low data rate communication channel, from the transceiver 12 (which only includes OSC transmitter means) to the portable device 20 (which only includes OSC receiver means).

Essentially, OSC communication is a communication which makes use of the body mass of the individual as a communication medium (body-medium communication). This requires that the user physically contacts a suitable part of transceiver 12, on the one side, and a suitable part of portable device 20, on the other side, in order to enable OSC signals to be transmitted from the terminal to the portable device.

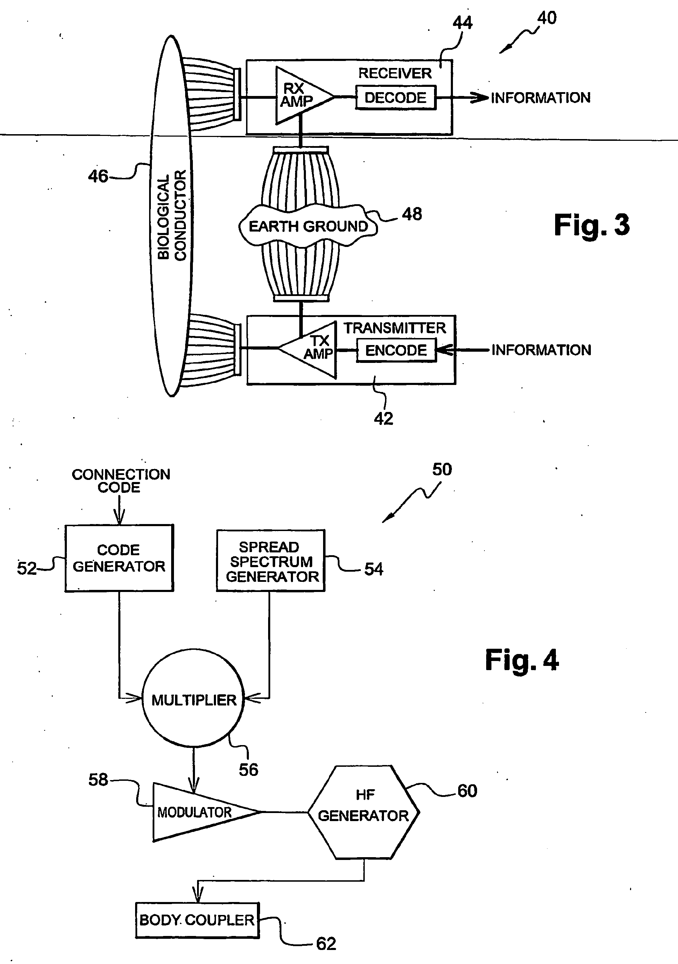

Details of OSC communication will be given below, in particular in reference to Figure 3.

The second communication channel, which will be called "RF communication" is a two-way, high data rate communication channel between the transceiver 12 and the portable device 20, both being provided with RF transmitter and receiver means.

RF communication may be of any known wireless, short-range communication technique such as Bluetooth (IEEE 802.15.1), WPAN (IEEE 802.15.3), HiperLan 2, ETSI-BRAN, etc. All such communication standards enable two-way exchange of data at high rate (typically between 2 and 100 Mbit/s) at short range (typically several tens of centimetres to several metres) with low transmission power.

The first step of the identification procedure is the transmission from the terminal to the portable device of a so-called "connection code" through the OSC communication channel. Such a transmission may be initiated once the individual is physically in contact with some part of the transceiver 12 and also with some other part of the portable device 20 in order to connect both parts through the individual's body.

The connection code includes two random numbers A and B and a mess sage *C* containing an identification of the class to which belongs the terminal.

Once the OSC receiver of the portable device has received the connection code, number A is retrained in a store of the device. Data processing means included in the device 20 checks that the specific portable device having received the code does belong to the class of the terminal to which identification is requested. This is done by comparing the class identification included in message C to corresponding data stored in a memory of portable device 20.

Once it has been checked that the respective classes of the terminal and the portable device indeed match, the portable device initiates RF communication and publishes number B.

The RF signal including *B* is received by transceiver 12 of the terminal which checks that this number *B* is the same as the one that had initially been transmitted in the connection code. Such comparison is in particular intended to manage with the case where several portable devices would be simultaneously present in the environment of the transceiver 12, with the latter concurrently receiving several RF signals originating from different portable devices.

In a further step, the terminal transmits to the portable device through the RF communication channel a Request To Send number A (RTSA). This request is received by the portable device, which transmits through the RF communication channel the value A which had been retained in the store after reception of the connection code by the OSC receiver. Once this check has been successfully performed, the transaction may further proceed between the terminal and the portable device, through the RF communication channel. The next time a connection will have to be initiated between the terminal and the portable device, new values of random numbers A and B will be chosen which are not determinable by any portable device.

A first advantage of the system of the invention that has been described is that identification may be performed - hence the transaction may proceed only after the individual has physically contacted an equipment of the terminal, e.g. by touching a contact part (metallic pad, metallic handle, etc.) of the same by his hand or by the tip of his finger. This prohibits any use of the portable device without a voluntary action of the (fully identified) individual. This security feature is particularly important in portable devices making use of wireless communication in order to avoid any accidental of fraudulent establishment of an RF communication without the knowing and consent of the individual owning the card.

A second advantage of the invention is that it just requires a very short contact by the individual of the contact part of the terminal (e.g. just a touch) for OSC transmission of the connection code, nevertheless all further exchange of signals between terminal and portable device is performed through RF communication with high data rate and sophisticated techniques involving correction codes, ciphering, noise and interference rejection, etc.

The invention in particular permits to retain all advantages of an OSC communication (positive action of the individual required to initiate communication) without the drawbacks of the same (in particular the low data rate).

Besides, despite the fact that OSC communication requires a relatively high transmission power, since the invention OSC communication is only one-way there is no need to have an OSC transmitter in the portable device, which may be devised with low-consurription circuits and a small battery.

A further security level may be added by providing in the portable device a biometric identification device including a specific sensor such as a fingerprint sensor (either capacitive, thermal or optical sensor), a voiceprint sensor, a subcutaneous ultrasonic sensor, etc. Biometric identification will ascertain that the individual who bears the portable device and attempts to initiate OSC communication by physical contact with the terminal is indeed the authorized user, not e.g. an individual who had stolen the portable device of the authorized user.

Figure 2 illustrates the main functional blocks of a preferred embodiment of the portable device 20. A data processing means 22 includes a microcontroller with a CPU, RAM, etc. and a series of buses and interfaces for communication with a number of peripheral devices including a non-volatile memory 24, an OSC receiver 26, a RF transmitter/receiver 28, an optional biometric sensor 30, an optional light/sound indicator 36 and a time/date stamp circuit 38. The whole device is powered by a rechargeable battery 32 connected to a charger 34.

As far as the OSC receiver 26 is concerned, this is a device of a known type for receiving signals transmitted through the body of an individual. OSC communication is a known technique, studied in particular in papers by T. Zimmermann, who had devised a "Personal Area Network" limited to the extent of the body of an individual by making use of the biologic mass as a transmission medium.

Figure 3 illustrates the principle of such a transmission, which is based on the use of quasi-electrostatic fields. An OSC system 40 includes a transmitter 42 and a receiver 44 coupled by a biological conductor 46, the return loop being through ground 48. Since the attenuation of the signal issued by the transmitter 42 is very high (typically 60 dB) and mainly depends on the return through ground (10 fF), the transmission signal must be powerful enough to be correctly decoded by receiver 44. However, a lower amplitude may be chosen for the transmitted signal, by using a more sensitive receiver and interference-elimination techniques such as DSSS (Direct Sequence Spread Spectrum) techniques.

However, in any case, the data rate remains low, typically less than 10 kbit/s. Nevertheless, as explained above, the system of the invention just requires a very small data volume (a few hundreds of bits) to be received by the OSC receiver.

Since OSC involves a communication medium which is a part of the body of the individual, the OSC receiver 26 includes a sensing element which is in contact with the body of the individual, preferably in permanent contact. The portable device may also include a (not shown) device for detecting that the sensing element is indeed in contact with the body of the individual and has not been taken apart, and for inhibiting any operation of the device otherwise. Such a device may e.g. include an electric or thermal sensor for detecting heart beat; such sensors are well-known to the may skilled in the art and will not be further described. A preferential implementation is a portable device in the form of a wristwatch: if the watch is taken off from the arm of the user, the embedded electronic circuit of the portable device will be automatically deactivated.

A typical arrangement of circuits for an OSC transmitter 50 (as the one included in transceiver 12 of the terminal) is shown on Figure 4. It includes a code generator 52 receiving the connection code to be sent to the portable device, and a spread spectrum generator 44. Both signals are combined in a multiplier 56, which controls a modulator 58 driving an HF generator 60. The modulated HF signal is applied to a body coupler 62 for transmission to the portable device through the body mass of the individual.

Given the security features explained above, there is no need to cipher the information transmitted through OSC communication, which enables simple and robust signal transmission with low risk of signal loss or alteration.

Turning again to Figure 2, in addition to OSC receiver 26, the portable device 20 includes also an RF transmitter/receiver 28 interfaced to processing means 22.

As mentioned above RF communication may be through any known means such as Bluetooth, WPAN, HiperLan 2, ETSI-BRAN, etc. The transmitter in the portable device is devised so as to have low consumption (less than 20 mW), thanks to low RF transmission power (less than 1 mW) due to the short range between the portable device and the terminal. Further, by implementing interference-reduction techniques such as DSSS, it is possible to keep a small size for the transmitter in the portable device, yet enabling high data rate (typically between 2 Mbit/s and 100 Mbit/s, depending on the requirements of the appiication). Reduction of interference may be obtained by techniques such as Direct Sequence Spread Spectrum (DSSS) modulation or any other known technique well known from the man skilled in the art. RF communication may further implement an interoperability standard such as IETF-TLS and/or standard communication protocols such as TCP/IP.

The whole portable device 20 is powered by a rechargeable battery 32 combined with a charger 34. Charger 34 is preferably a non-contact charger, e.g. using magnetic induction, light cells, or an EM field receiver antenna.

It should be noted that in the standby state of the portable device only the OSC receiver 26 and the time/date stamp 38 are (partially) active. Once data signals are received by the OSC receiver 26, then all the main functions of the device, especially the data processing means 22, will be waked up. Since on normal use, i.e. excluding identification, the individual may be in contact with a wide variety of equipments possibly compatible with the system of the invention, a preliminary check upon the terminal class indicator received by the OSC receiver is performed before any activation of the biometric sensor 30 and of the RF transmitter/receiver 28. This avoids activating such modules - which require substantial power supply - only if the individual is in contact with a terminal actually corresponding to the class of equipment authorized (as stored in the memory of the portable device).

The time/date stamp circuit 38 is preferably adapted to be set through a communication network, e.g. by means of a network time protocol such as RFC 1119 and RFC 1305.

Indicator 36 may be a light indicator (LED or LCD display) and/or a buzzer, enabling a confirmation given to the individual of a positive (or negative) identification with respect to the system.

The invention described above may be used in a number of different applications.

A first typical application is in the telephone field, wherein the terminal is a mobilephone or a telephone handset incorporating a contact pad such that, once the phone is handed by the user bearing the portable device (e.g. in the form of a wristwatch in permanent contact with his body), the phone is automatically configured and adapted to receive phone calls. The phone may access a telephone directory stored in the portable device and/or automatically set preferential parameters of the user. Further, the call may be billed to a specific subscriber account, which details are stored in the portable device.

Another typical application is with vending machines, wherein the user has just to touch the drawer or door of the dispenser of the machine to enable the transaction, without any need to introduce money, credit card, etc. in the machine.

Other typical applications are in the field of conditional access (either physical or logical). For instance, it may be enough for the user to touch as computer to initiate the check of his authorization to access the computer or network and load a user profile in the computer, with no need to ask for a password. Means may be provided to automatically lock the computer if the user moves away from the computer to a distance which is not enough to maintain RF communication.

The portable device of the invention may also give access to a transportation means. This may be a personal transport means, the portable device functionally corresponding to the contact key of a car and further storing information about driving license, insurance, rental details, etc. The device may also enable an individual user to access public transportation just by pushing an access door (the physical contact with a terminal resulting from this contact with the door); by checking entry and exit points, the system may also bill the user automatically as a function of the distance travelled.

Many other applications may as well take benefit of the advantages of the system of the invention, such as (the following list being of corse not limited):
- storing of personal data with automatic conditional access;
- on-the-fly ciphering/deciphering and storing of data;
- access to restricted area: an electric lock or disablement of an alarm may be obtained just by contacting and turning the handle of a door;
- protection against hazardous appliances such as a guns, the system of the invention being implemented such that the gun can be triggered only by an authorized individual, who is identified automatically at the moment he grasps the handle of the gun;
- tracking of individuals in premises: every time the individual touches and opens a door, his is automatically identified by the system and the corresponding time and location are logged in a central database of the system;
- triggering an alarm when the individual moves away from the terminal at a distance which no longer enables safe RF communication;
- localisation of a person, just by letting him touch a special post having a known position : the system then automatically sends to a central site a message indicating position and identity of the requesting person.

## Claims

1. A system for identifying an individual, said system comprising:
- a terminal (10), said terminal comprising a body coupler (62) and a radiofrequency receiver (12),
- a portable device (20), said portable device including a over skin communication receiver (26) and a radiofrequency transmitter,
**characterised in that**:
- said terminal is adapted to transmit, through said body coupler, to said portable device, a connection code (CONNECTION CODE) including terminal identification class (C), upon a physical contact established by the individual's body between said terminal and said portable device,
- said portable device is adapted to check said terminal identification class within said connection code received through said over skin communication receiver, wherein said portable device includes a biometric sensor (30) for checking biometric data of said individual and for ascertaining that the individual bearing the portable device is an authorized user, and, according to said terminal identification class, establish a communication with said terminal, through said radiofrequency transmitter.

2. The system according to claim 1, wherein said connection code further includes a first identification number. (B) which is returned by the portable device for establishing the communication through said radiofrequency transmitter.

3. The system of claim 2, wherein said communication code includes a second identification number (A)

4. The system according to claim 3, wherein said portable device includes a radiofrequency receiver, wherein said terminal includes a radiofrequency transmitter and is adapted to transmit, through said radiofrequency transmitter, to said portable device, a signal for requesting said portable device to transmit, through said radiofrequency transmitter, said second identification number (A), and wherein said portable device is adapted to transmit to said terminal, through said radiofrequency transmitter, said second identification number (A).

5. The system according to claim 3 or 4, wherein said terminal is adapted to check that said second identification number (A) received, through said radiofrequency receiver, from said portable device matches the one sent, through said body coupler, to said portable device.

6. The system according to any previous claim, wherein said terminal is adapted to check that said first identification number (B) received, through said radiofrequency receiver, from said portable device matches the one sent, through said body coupler, to said portable device.

7. The system according to claim 1, wherein said biometric sensor (30) is one of a fingerprint sensor, a voiceprint sensor and a subcutaneous ultrasonic sensor.

8. The system according to any claim 1 to 7, wherein said portable device includes a means for detecting an interruption of said physical contact established by the individual's body with said portable device.

9. The system according to claim 1 to 8, wherein said portable device is in a standby state in which only the over skin communication receiver is active and wherein all the functions of the portable device are waked up after the reception of data by the over skin communication receiver.

10. A portable device (20) for identifying an individual, said portable device including a over skin communication receiver (26) and a radiofrequency transmitter,
**characterized in that** said portable device is adapted:
- to check, with a biometric sensor (30), biometric data for ascertaining that the individual bearing the portable device is an authorized user,
- to receive, through said over skin communication receiver, a connection code (CONNECTION CODE) including terminal identification class (C), upon a physical contact established by the individual's body, and
- to check said terminal identification class within said connection code received through said over skin communication receiver and, according to said terminal identification class, establish a communication through said radiofrequency transmitter.

11. The portable device according to claim 10, wherein said connection code further includes a first identification number (B) which is returned by the portable device for establishing the communication through said radiofrequency transmitter.

12. The system of claim 11, wherein said communication code includes a second identification number (A)

13. The portable device according to claim 12, wherein said portable device includes a radiofrequency receiver,
wherein said portable device is adapted to receive, through said radiofrequency receiver, a signal for requesting to transmit, through said radiofrequency transmitter, said second identification number (A), and
wherein said portable device is adapted to transmit, through said radiofrequency transmitter, said second identification number (A).

14. The portable device according to one of the claims 10 to 13, wherein said biometric sensor (30) is one one fingerprint sensor, a voiceprint sensor and a subcutaneous ultrasonic sensor.

15. The portable device according to any claim 10 to 14, wherein said portable device includes a means for detecting an interruption of said, physical contact established by the individual's body with said portable device.

16. The portable device according to any claim 10 to 15, wherein said portable device includes a memory storing at least one information relating to the terminal identification with which said portable device is able to cooperate with.

17. The portable device according to claim 10 to 16, wherein said portable device is in a standby state in which only the over skin communication receiver is active and wherein all the functions of the portable device are waked up after the reception of data by the over skin communication receiver.

## Patentansprüche

1. Ein System zur Personenidentifizierung, besagtes Systems umfasst folgende Teile:
- ein Terminal (10), wobei das besagte Terminal einen Körperkontakt (62) und einen Radiofrequenzempfänger (12) umfasst
- ein tragbares Gerät (20), wobei das besagte tragbare Gerät einen Empfänger von Kommunikation über die Haut (26) und einen Radiofrequenzsender beinhaltet,
und **dadurch gekennzeichnet ist, dass**:
- das besagte Terminal so angepasst wurde, dass es einen Verbindungscode (VERBINDUNGSCODE) einschließlich einer Identifizierungsklasse (C) für das Terminal über den besagten Körperkontakt an das besagte tragbare Gerät sendet und zwar mittels eines physikalischen Kontaktes, der durch den Körper der Einzelperson zwischen dem besagten Terminal und dem besagten tragbaren Gerät erzeugt wird.
- das besagte tragbare Gerät so angepasst wurde, dass die besagte Identifizierungsklasse des Terminals innerhalb des besagten Verbindungscodes überprüft wird, der mittels des besagten Empfängers von Kommunikation über die Haut empfangen wird, wobei das besagte tragbare Gerät einen biometrischen Sensor (30) beinhaltet, mit dem die biometrischen Daten der besagten Einzelperson überprüft werden und sichergestellt wird, dass es sich bei der Einzelperson, die das tragbare Gerät trägt, um einen berechtigten Benutzer handelt und dass gemäß der besagten Identifizierungsklasse für das Terminal eine Kommunikation mit dem besagten Terminal über den besagten Radiofrequenzsender erzeugt wird.

2. Das System gemäß Anspruch 1, wobei der besagte Verbindungscode noch eine erste Identifizierungsnummer (B) beinhaltet, die durch das tragbare Gerät zur Erzeugung der Kommunikation durch den besagten Radiofrequenzsender zurückgegeben wird.

3. Das System von Anspruch 2, wobei der besagte Kommunikationscode eine zweite Identifizierungsnummer (A) beinhaltet.

4. Das System gemäß Anspruch 3, wobei das besagte tragbare Gerät einen Radiofrequenzempfänger beinhaltet,
wobei das besagte Terminal einen Radiofrequenzsender beinhaltet und so angepasst ist, dass es durch den besagten Radiofrequenzsender an das besagte tragbare Gerät ein Signal senden kann, wodurch das besagte tragbare Gerät aufgefordert wird, die besagte zweite Identifikationsnummer (A) durch den besagten Radiofrequenzsender zu senden, und
wobei das besagte tragbare Gerät so angepasst ist, dass es die besagte zweite Identifikationsnummer (A) durch den besagten Radiofrequenzsender an das besagte Terminal sendet.

5. Das System gemäß den Ansprüchen 3 und 4, wobei das besagte Terminal so angepasst ist, dass es überprüfen kann, ob die zweite Identifikationsnummer (A), die durch den besagten Radiofrequenzempfänger von dem besagten tragbaren Gerät empfangen wurde, der Nummer entspricht, die durch den besagten Körperkontakt an das besagte tragbare Gerät geschickt wurde.

6. Das System gemäß jeglichen vorherigen Ansprüchen, wobei das besagte Terminal so angepasst wurde, dass es überprüft, ob die besagte erste Identifikationsnummer (B), die durch den besagten Radiofrequenzempfänger von dem besagten tragbaren Gerät empfangen wurde, der Nummer entspricht, die durch den besagten Körperkontakt an das besagte tragbare Gerät geschickt wurde.

7. Das System gemäß Anspruch 1, wobei es sich bei dem besagten biometrischen Sensor (30) um einen Fingerabdrucksensor, einen Stimmenaufzeichnungssensor oder einen subkutanen Ultraschallsensor handelt.

8. Das System gemäß jeglicher Ansprüche von 1 bis 7, wobei das besagte tragbare Gerät ein Mittel zur Erkennung einer Unterbrechung des besagten physikalischen Kontaktes beinhaltet, der durch den Körper der Einzelperson mit dem besagten tragbaren Gerät erzeugt wurde.

9. Das System gemäß den Ansprüchen 1 bis 8, wobei sich das besagte tragbare Gerät im Standby-Modus befindet und nur der Empfänger von Kommunikation über die Haut aktiv ist und alle Funktionen des tragbaren Gerätes angeschaltet sind, nachdem Daten durch den Kommunikationsempfänger über die Haut empfangen wurden.

10. Ein tragbares Gerät (20) zur Identifizierung einer Einzelperson, wobei das besagte tragbare Gerät einen Empfänger von Kommunikation über die Haut (26) und einen Radiofrequenzsender beinhaltet,
und **dadurch gekennzeichnet ist, dass** das besagte tragbare Gerät so angepasst ist, dass:
- es die biometrischen Daten mit einem biometrischen Sensor (30) überprüft, um festzustellen, ob es sich bei der Einzelperson, die das tragbare Gerät trägt, um einen berechtigten Benutzer handelt,
- es einen Verbindungscode (VERBINDUNGSCODE) einschließlich einer Identifizierungsklasse (C) für das Terminal empfängt und zwar mittels eines physikalischen Kontaktes, der durch den Körper der Einzelperson erzeugt wird, und
- die besagte Identifizierungsklasse für das Terminal innerhalb des besagten Verbindungscodes überprüft wird, der mittels des besagten Empfängers von Kommunikation über die Haut erhalten wird und dass gemäß der besagten Identifizierungsklasse für das Terminal eine Kommunikation mit dem besagten Terminal über den besagten Radiofrequenzsender erzeugt wird.

11. Das tragbare Gerät gemäß Anspruch 10, wobei der besagte Verbindungscode noch eine erste Identifikationsnummer (B) beinhaltet, die an das tragbare Gerät zurückgegeben wird, um die Kommunikation durch den besagten Radiofrequenzsender zu erzeugen.

12. Das System von Anspruch 11, wobei der besagte Kommunikationscode eine zweite Identifizierungsnummer (A) beinhaltet.

13. Das tragbare Gerät gemäß Anspruch 12, wobei das besagte Gerät einen Radiofrequenzsender beinhaltet,
wobei das tragbare Gerät so angepasst ist, dass es durch den Radiofrequenzempfänger ein Aufforderungssignal zum Senden der besagten zweiten Identifizierungsnummer (A) durch den besagten Radiofrequenzsender empfängt, und
wobei das besagte tragbare Gerät so angepasst ist, dass es durch den Radiofrequenzempfänger die besagte zweite Identifikationsnummer (A) sendet.

14. Das tragbare Gerät gemäß einem der Ansprüche von 10 bis 13, wobei es sich bei dem besagten biometrischen Sensor (30) um einen Fingerabdrucksensor, einen Stimmenaufzeichnungssensor oder einen subkutanen Ultraschallsensor handelt.

15. Das tragbare Gerät gemäß einem der Ansprüche von 10 bis 14, wobei das besagte tragbare Gerät ein Mittel zur Erkennung einer Unterbrechung des besagten physikalischen Kontaktes beinhaltet, der durch den Körper der Einzelperson mit dem besagten tragbaren Gerät erzeugt wurde.

16. Das tragbare Gerät gemäß einem der Ansprüche von 10 bis 15, wobei das besagte tragbare Gerät einen Speicher beinhaltet, der mindestens eine Information enthält, die sich auf die Identifikation des Terminals bezieht, mit der das tragbare Gerät kooperieren kann.

17. Das tragbare Gerät gemäß den Ansprüchen 10 bis 16, wobei das besagte tragbare Gerät sich im Standby-Modus befindet, bei dem nur der Empfänger von Kommunikation über die Haut aktiv ist und alle Funktionen des tragbaren Gerätes angeschaltet sind, nachdem Daten durch den Empfänger von Kommunikation über die Haut empfangen wurden.

## Revendications

1. Un système servant à identifier un individu, ledit système comprenant :
- un terminal (10), ledit terminal comprenant un coupleur de corps (62) et un récepteur radio (12),
- un dispositif portable (20), ledit dispositif portable incluant un récepteur de communication sur la peau (26) et un émetteur radio,
**caractérisé en ce que** :
- ledit terminal est conçu pour transmettre audit dispositif portable via ledit coupleur de corps un code de connexion (CODE DE CONNEXION) incluant une classe d'identification du terminal (C), après un contact physique établi par le corps de l'individu entre ledit terminal et le dispositif portable,
- ledit dispositif portable est conçu pour vérifier ladite classe d'identification du terminal au sein dudit code de connexion reçu par ledit récepteur de communication sur la peau, sachant que ledit dispositif portable inclut un capteur biométrique (30) permettant de contrôler les données biométriques dudit individu et d'établir que l'individu portant le dispositif portable est un utilisateur autorisé et, suivant ladite classe d'identification du terminal, d'établir une communication avec ledit terminal via ledit émetteur radio.

2. Le système, conformément à la revendication 1, sachant que ledit code de connexion inclut par ailleurs un premier numéro d'identification (B) qui est retourné par le dispositif portable pour l'établissement de la communication via ledit émetteur radio.

3. Le système conformément à la revendication 2, sachant que ledit code de communication inclut un second numéro d'identification (A).

4. Le système conformément à la revendication 3, sachant que ledit dispositif portable inclut un récepteur radio,
sachant que ledit terminal inclut un émetteur radio et est conçu pour transmettre un signal audit dispositif portable via ledit émetteur radio demandant audit dispositif portable de transmettre via ledit émetteur radio ledit second numéro d'identification (A) et sachant que ledit dispositif portable est conçu pour transmettre via ledit émetteur radio audit terminal ledit second numéro d'identification (A).

5. Le système, conformément à la revendication 3 ou 4, sachant que ledit terminal est conçu pour vérifier que ledit second numéro d'identification (A), reçu via ledit récepteur radio depuis ledit dispositif portable, correspond à celui envoyé via ledit coupleur de corps audit dispositif portable.

6. Le système, conformément à l'une des revendications précédentes, sachant que ledit terminal est conçu pour vérifier que ledit premier numéro d'identification (B) reçu via ledit récepteur radio depuis ledit dispositif portable correspond à celui envoyé via ledit coupleur de corps audit dispositif portable.

7. Le système, conformément à la revendication 1, sachant que ledit capteur biométrique (30) est un capteur pour empreinte digitale, un capteur pour empreinte vocale et un capteur sous-cutané à ultrasons.

8. Le système, conformément à l'une des revendications 1 à 7, sachant que ledit dispositif portable inclut un moyen de détecter une interruption dudit contact physique établi entre le corps de l'individu et le dispositif portable.

9. Le système, conformément aux revendications 1 à 8, sachant que ledit dispositif portable est dans un état de veille dans lequel seul le récepteur de communication sur la peau est actif et sachant que toutes les fonctions du dispositif portable sont réactivées après la réception de données par le récepteur de communication sur la peau.

10. Un dispositif portable (20) servant à identifier un individu, ledit dispositif portable comprenant un récepteur de communication sur la peau (26) et un émetteur radio,
**caractérisé en ce que** ledit dispositif portable est conçu :
- pour vérifier à l'aide d'un capteur biométrique (30) des données biométriques pour confirmer que l'individu portant le dispositif portable est un utilisateur autorisé,
- pour recevoir via ledit récepteur de communication sur la peau un code de connexion (CODE DE CONNEXION) incluant la classe d'identification du terminal (C) après un contact physique établi avec le corps de l'individu, et
- pour vérifier ladite classe d'identification du terminal dans ledit code de connexion reçu via ledit récepteur de communication sur la peau et, selon ladite classe d'identification du terminal, pour établir une communication via ledit émetteur radio.

11. Le dispositif portable, conformément à la revendication 10, sachant que ledit code de connexion inclut également un premier numéro d'identification (B) qui est retourné par le dispositif portable pour établir la communication via ledit émetteur radio.

12. Le système de la revendication 11, sachant que ledit code de communication inclut un second numéro d'identification (A).

13. Le dispositif portable conformément à la revendication 12, sachant que ledit dispositif portable inclut un récepteur radio,
sachant que ledit dispositif portable est conçu pour recevoir via ledit récepteur radio un signal demandant de transmettre via ledit émetteur radio ledit second numéro d'identification (A), et sachant que ledit dispositif portable est conçu pour transmettre via ledit émetteur radio ledit second numéro d'identification (A).

14. Le dispositif portable conformément à l'une des revendications 10 à 13, sachant que ledit capteur biométrique (30) est un capteur pour empreinte digitale, un capteur pour empreinte vocale et un capteur sous-cutané à ultrasons.

15. Le dispositif portable conformément à l'une des revendications 10 à 14, sachant que ledit dispositif portable inclut un moyen de détecter une interruption dudit contact physique établi entre le corps de l'individu et ledit dispositif portable.

16. Le dispositif portable conformément à l'une des revendications 10 à 15, sachant que ledit dispositif portable inclut une mémoire conservant au moins une information relative à l'identification du terminal avec laquelle ledit dispositif portable est capable de coopérer.

17. Le dispositif portable conformément aux revendications 10 à 16, sachant que ledit dispositif portable est dans un état de veille dans lequel seul le récepteur de communication sur la peau est actif et sachant que toutes les fonctions du dispositif portable sont réactivées après la réception de données par le récepteur de communication sur la peau.
